Europäisches Patentamt

European Patent Office

Office européen des brevets

(11) Publication number: 0 347 997
A2

# EUROPEAN PATENT APPLICATION

(21) Application number: 89201599.1

(51) Int. Cl.⁴: G11B 5/17

(22) Date of filing: 19.06.89

(30) Priority: 23.06.88 NL 8801595

(43) Date of publication of application:
27.12.89 Bulletin 89/52

(84) Designated Contracting States:
AT DE FR GB IT

(71) Applicant: N.V. Philips' Gloeilampenfabrieken
Groenewoudseweg 1
NL-5621 BA Eindhoven(NL)

(72) Inventor: Van den Reek, Johannes Nicolaas
Johanna Maria
c/o INT. OCTROOIBUREAU B.V. Prof.
Holstlaan 6
NL-5656 AA Eindhoven(NL)
Inventor: Caers, Johan Frans Justin Maria
c/o INT. OCTROOIBUREAU B.V. Prof.
Holstlaan 6
NL-5656 AA Eindhoven(NL)
Inventor: Daenen, Theo Ernest Gerard
c/o INT. OCTROOIBUREAU B.V. Prof.
Holstlaan 6
NL-5656 AA Eindhoven(NL)

(74) Representative: Van Weele, Paul Johannes
Frits et al
INTERNATIONAAL OCTROOIBUREAU B.V.
Prof. Holstlaan 6
NL-5656 AA Eindhoven(NL)

(54) Method of producing a magnetic head as well as a magnetic head producted in accordance with the method.

(57) A method of producing a magnetic head, the method being based on a substrate (9) on which a first conductor pattern (6) is provided. This conductor pattern (6) is provided with an insulating layer (10) in which apertures extending to as far as the conductor pattern (6) and recesses are made. Connection members (8) are formed in these apertures and core limbs (1a, 1b) of the magnetic head are placed in the recesses. Finally, the connection members (8) are connected to a second conductor pattern (5) present on a carrier, the conductor patterns (5, 6) and the connection members (8) constituting coils (4a, 4b).

FIG.1

# Method of producing a magnetic head as well as a magnetic head produced in accordance with the method

The invention relates to a method of producing a magnetic head having at least one winding aperture and at least one transducing gap, the magnetic head including at least one electrically conducting coil and at least one core limb which is surrounded at least partly by the coil, the method being based on a substrate on which a first electrically conducting conductor pattern is provided, electrically conducting connection members having at least one contact pad are formed by electrodeposition on this conductor pattern, the core limb is positioned on the first conductor pattern and partly between the connection members, a first insulating film being formed between the core limb and the conductor pattern, thereafter the connection members are electrically connected via their contact pads to a second electrically conducting conductor pattern present on a carrier, a second insulating film being formed between the core limb and the second conductor pattern.

The invention also relates to a magnetic head including at least one electrically conducting coil, at least one core limb which is partly surrounded by the coil, at least one winding aperture and at least one transducing gap, a second insulating film being present between core limb and coil, the coil including a first electrically conducting conductor pattern at one side of the core limb and a second electrically conducting conductor pattern at a further at least substantially parallel side of the core limb, as well as electrically conducting connection members extending between the conductor patterns.

The method described in the foregoing, and also the magnetic head described are disclosed in DE 30 36 218 A1. In accordance with the prior art method, the coil is not wound manually or by means of a winding machine around the core of the magnetic head as has been the general practice so far. In view of the need for increasingly higher information densities on magnetic information carriers, more specifically on magnetic tapes, and the attendant miniturisation of the magnetic heads it becomes increasingly more difficult to produce the coils of the magnetic heads using the coil winding techniques customary so far. In the method described in DE 30 36 218 A1 truncated conical connection members are formed by electrodeposition on both the first and the second conductor patterns, which connection members are interconnected.

Forming the connection members in known manner on the conductors was found to be problematic in practice, since the ultimate shape of the connection members is not very well reproducible.

There is also no insulating layer around the connection members, so that they may cause short circuits via, for example, dirt particles. It is also possible that in moist conditions leakage currents occur in the magnetic heads produced by means of the prior art method.

The invention has for its object to provide a method of producing magnetic heads, in which the formation of the connection members can be controlled to an improved extent and wherein the connection members are surrounded by insulating material, as well as a magnetic head which can be produced in accordance with that method.

As regards the method, the invention is characterized in that prior to the formation of the connection members the first conductor pattern is provided with an electrically insulating layer having apertures extending to the conductor pattern and at least one recess, whereafter the connection members are formed in said apertures and the core limb is placed in the recess. Acting thus, the shape of the connection members is determined by the shape of the apertures in the previously applied insulating layer. The formation of the connection members is consequently controlled to an improved extent compared with the case in which the shape is determined by the shaping procedure itself. At the same time, after the connection members have been formed, an insulating layer is present around the connection members. Suitable materials with which the insulating layers can be formed are inter alia polyimide and polylethersulphon.

The object aimed at is also suitable for a method according to the invention for producing a magnetic head having at least one winding aperture and at least one transducing gap, the magnetic head including at least one electrically conducting coil and at least one core limb, which is surround at least partly by the coil, in which method a first electrically conducting conductor pattern is formed, one plane of which core pattern is connected to a substrate, electrically conducting connection members having at least one contasct pad are formed by electrodeposition on a different plane of this conductor pattern, the core limb is positioned on the first conductor pattern and partly between the connection members, a first insulating film being formed between the core limb and the conductor pattern, thereafter the connection members are electrically connected via their contact pads to a second electrically conducting conductor pattern present on a carrier, a second insulating film being formed between the core limb and the second conductor pattern, the method being characterized in that the first conductor pattern is produced on an insulating layer, which insulating layer with the first conductor pattern being provided with a protective layer which corresponds to said substrate, and that apertures which extend as far as the conductor pattern and at least one recess are provided in the insulating layer, whereafter the connection members are formed in said apertures and the core limb is placed in the recess.

The foregoing is advantageous if, before the protecting layer which corresponds to the substrate is applied on the first conductor pattern, and glue film is applied on the first conductor pattern. Applying a glue film on the conductor pattern prior to forming a further layer on the conductor pattern, is advantageous as this prevents air inclusions which occur during the application of a further layer. During making of the apertures with the aid of a laser, there is now no film of glue present between the first conductor pattern and the insulating layer, which glue film results in the formation of soot and discontinuities during laser cutting. The glue film would indeed be present if the starting point is a substrate on which the conductor pattern is formed and on which thereafter the insulating layer is formed after the conductor pattern has been provided with a glue film.

It should be noted that the United States Patent 3,731,005 discloses a method in which two layers, each provided with a conductor pattern and an intermediate layer, having apertures in which a conducting material is applied, are interconnected to constitute a coil of a magnetic head. Said material is applied in the intermediate layer prior to interconnection of the layers, by coating the walls of the apertures.

A preferred embodiment according to the invention is characterized in that the connection members are only formed on the first conductor pattern present on the substrate. This reduces the manufacturing costs since connection members are only formed on one of the two conductor patterns. In addition, forming only one connection member is cheaper than forming two shorter connection members. In addition, the connection members are preferably connected to the second conductor pattern by means of a thermal connection process, in which head is fed forward. This causes a more direct head transfer, since the required heat is passed directly to the pads to be interconnected instead of via one of the connection members. Consequently less heat is to be applied, which reduces the risk of damage to the carrier and the substrate.

A further preferred embodiment according to the invention is characterized in that at least substantially cylindrical connection members are formed. This has the advantage that because of the cylindrical shape the apertures can be provided in a more simple manner in the layer, for example using a laser or by means of drilling. A further advantage is that a cylindrical shape has a better diameter-height ratio than would be the case for , for example, a conical shape so that more turns per surface unit are possible.

In order to prevent the inclusion of air around the conductors a further method is characterized in that, prior to the provision of the insulating layer or the protective layer which corresponds to the substrate, on the first conductor pattern, a glue film is applied on the first conductor pattern.

So as to allow a rapid and accurate provision of the apertures and the recess a further method is characterized in that the apertures and the recess in the insulating layer are made with the aid of a laser. This offers advantages with respect to the more conventional processes for applying the apertures, namely, when a laser is used or the apertures can be applied in one run in the layer.

During the laser operation a layer of soot is possibly deposited on the conductor pattern. As this layer of soot may cause trouble it must be removed. To that end a further method is characterized in that after the apertures have been applied by means of a laser, these apertures are cleaned using an oxidizing agent.

A further method is characterized in that the apertures are cleaned using the oxidizing agent potassium permanganate and sodium hydroxide at a temperature of at least substantially $70\,^{\circ}C$, followed by a treatment with a peroxide sulphuric acid.

A further method is characterized in that the apertures in the insulating layer are provided by a mechanical treatment.

A still further method is characterized in that the connection members are connected by bumps via a bumping technique to the second conductor pattern present on the carrier. Conductors provided with raised contacts, alternatively referred to as "bumps", are known. The bumps serve for making electric contact to conductors on a substrate or to other metal conductors, it then not being necessary to use connecting wires. As this technique is used in the manufacture of integrated circuits and consequently is suitable for connecting this layers, this technique can be used with advantage for the envisaged connections to be formed.

An attendant method is characterized in that the contact pads of the connecting members are final-treated and are provided with an adhering layer onto which bumps are provided mechanically. The mechanical provision of the bumps has the advantage that it is possible to obtain a greater height of the bumps in a shorter period of time then in the other prior art methods of application, for example electrodeposition. So as to obtain an improved connection between the connecting members and the bumps, the contact surfaces of the connection members are final-treated. The mechanical application of bumps is known from US-PS 4,442,967.

A still further attendant method is characterized in that the adhering layer is constituted by a 2 μm thick nickel layer bearing a 1 μm gold layer. It was found that such a layer has good properties as regards adhering of the bumps.

A further method is characterized in that the bumps are electrodeposited on the contact pads of the connection members.

A still further attendant method is characterized in that the bumps after their application can be bonded to the free ends of the second conductor pattern on the carrier by means of thermocompression. This is a bonding technique which is simple and easy to perform and which can be used with advantage for making bump connections compared with the more conventional bonding techniques such as cementing or soldering.

A further advantageous method of connecting the connection members to the second conductor pattern is characterized in that a bonding layer of a low-melting material is electrodeposited on the contact pad, whereafter by melting of this layer and simultaneous pressing of the second conductor pattern against the layer the connection members are bonded to the second conductor pattern by diffusion. A suitable layer of low-melting material is preferably obtained by the use of material such as In, Pb and Sn. Pressing and simultaneous melting of the layer can also here be effected by means of thermal compression. So as to stress-relieve connections obtained by means of thermocompression, a further method is characterized in that the carrier is cemented to a headholder plate.

As regards the magnetic head which can be produced in the above-described manner, the invention is characterized in that each connection members forms one integral whole with one of the conductor patterns and is connected to the other conductor pattern via a connection. The fact that the connections between the two conductor patterns are each formed by one instead of two connection members is advantageous on connection of the connection member to the other conductor pattern than that on which the connection member has been formed. Said thermal bonding process is preferably a thermocompression process, in which the required heat is applied by means of a heated pressure die. The heated pressure die can now press on that conductor that is located opposite the connection member which causes the heat pressure to pass via this thin conductor to the planes to be interconnected, instead of via one of the connection members.

A further preferred embodiment of the magnetic head according to the invention is characterized in that all the connection members form one integral whole with one of the conductor patterns and are all connected to the other conductor pattern via connections. This has advantages for the manufacture, since this requires the formation of connection members on only one of the two conductor patterns.

An embodiment of the magnetic head according to the invention is characterized in that supply conductors are provided on the carrier, so that it is not necessary to connect individual supply wires or conductors to the coil.

A further practical embodiment of the magnetic head according to the invention is characterized in that the magnetic head includes a further core limb which is connected to the previous core limb, a transducing gap being present between the core limbs.

A further embodiment of the magnetic head according to the invention is characterized in that the magnetic head includes a further coil which is electrically connected to the previous coil. This has the advantage that one or more turns can be formed whereby a greater magnetic flux can be realized. A further advantage is that the magnetic head may be of a small dimension, since the required number of turns can be divided over two coils, so that the coils may be of a smaller size.

A still further embodiment of the magnetic head according to the invention is characterized in that there is a multiple head having at least two transducing gaps and at least two magnetic heads, which are produced in accordance with the method of producing magnetic heads, described in the foregoing. This has the advantage that a plurality of conductors can be written and read simultaneously.

The invention will now be described in greater detail by way of example, with reference to embodiments and manufacturing steps shown in the accompanying drawings:

Herein:

Figure 1 shows a first embodiment of a magnetic head according to the invention,

Figure 2 shows a substrate with the connection members formed thereon,

Figure 3 shows core limbs placed on the substrate,

Figure 4 illustrates the thermocompression process,

Figure 5 shows the bond such as it is formed by the thermocompression process,

Figure 6 shows the diffusion process,

Figure 7 shows the bond such as it is formed by the diffusion process, and

Figure 8 shows a second embodiment of a dual magnetic head produced in accordance with the method of the invention.

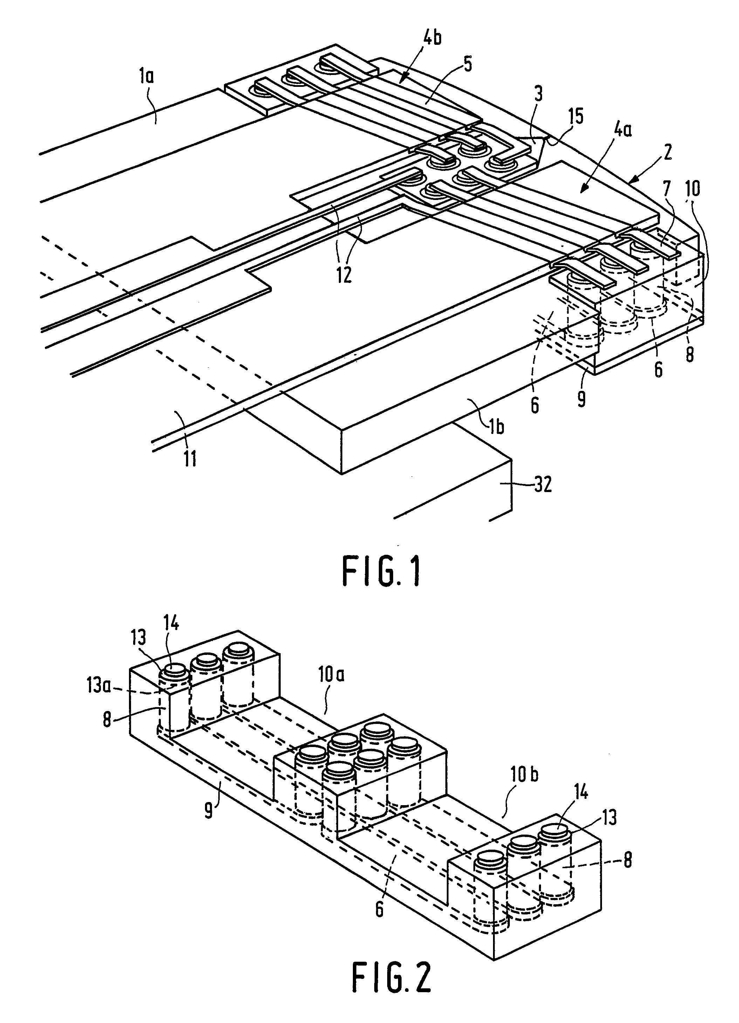

The embodiment of a magnetic head according to the invention shown in Figure 2, includes two core limbs 1a, 1b each partly wrapped around by a coil 4a, 4b and having recesses which constitute a winding aperture 3. A first conductor pattern 6 provided on a substrate 9 is located at one point of the core limbs. The ends of the conductors are provided with connection members 8 of a cylindrical shape.

These connection members 8 are embedded in an insulating layer 10 which forms one integral whole with the substrate 9, layer 10 also covers the first conductor pattern 6 and thus forms an insulating film between this conductor pattern and the core limbs 1a, 1b. At the other side of the core limbs 1a, 1b there is a carrier 11 on which supply conductors 12 and a second conductor pattern 5 are present. This carrier forms a first insulating film between the core limbs 1a, 1b and the second conductor pattern 5. The conductor ends 7 of the second conductor pattern 5 are connected to the upper sides of the connection members. A transducing gap 15 is formed in the tape contact face 2 of the magnetic head between the two core limbs.

Such a magnetic head can be produced as follows. In a first step the first conductor pattern 6 is formed on the substrate 9 by etching (Figure 2). In a second step the insulating layer 10 having a thickness which corresponds to the height of the connection members is applied on the overall surface area of the substrate 9, for example by cementing. The apertures of the connection members 8, and also the recesses 10a, 10b for the core limbs 1a, 1b are simultaneously applied in the layer 10 in a third step with the aid of a laser.

During the laser operation a layer of soot may be deposited on the conductor pattern 6. This soot layer is predominantly caused by the presence of a glue layer on the conductor pattern and is annoying during the electrodeposition of the connection members 8. To prevent this annoying presence, the layer of soot must first be removed. For that purpose, after the apertures have been formed, these apertures are cleaned with the aid of a laser, using an oxidizing agent, preferably potassium permanganate and sodium hydroxide at a temperature of approximately 70°C, followed by a peroxide sulphuric acid treatment.

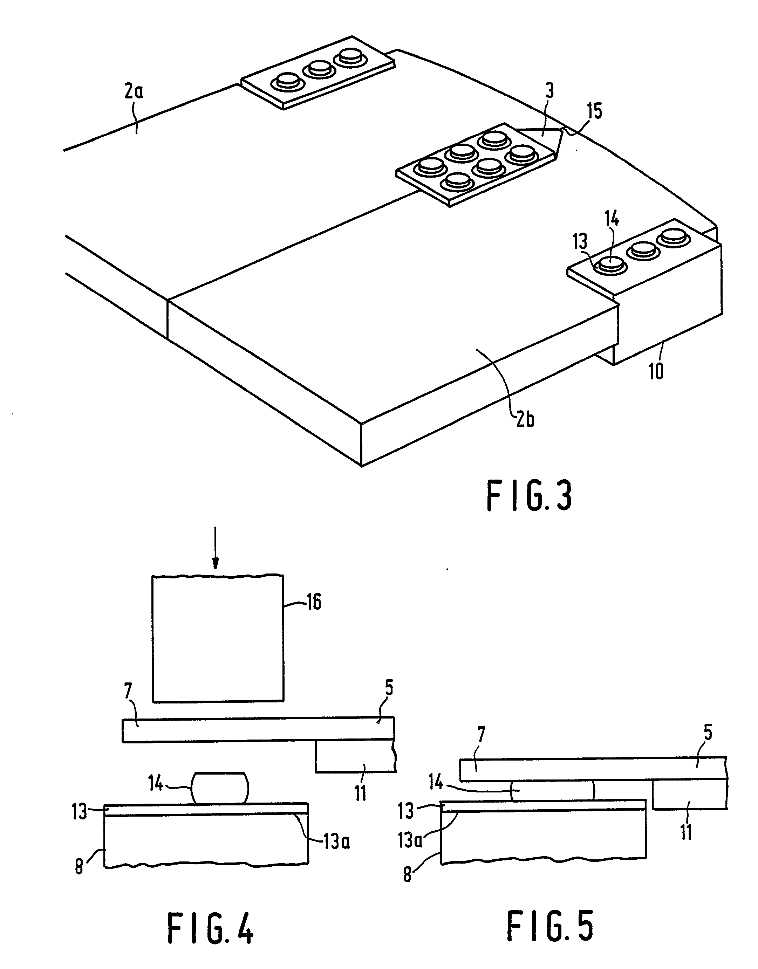

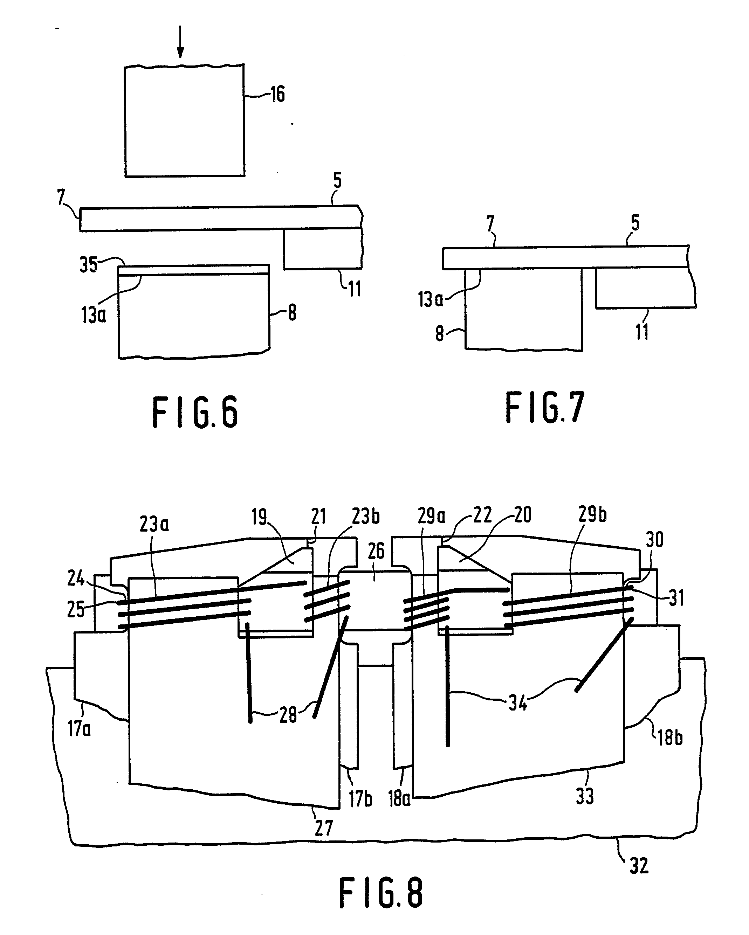

In this process it is inter alia important for the layer 10 to be of a homogeneous composition. In a first operational step, the laser-produced apertures are used for the formation of electrodeposited connection members 8. To that end the apertures extend to as far as the conductor pattern 6 which is present on the substrate 9 and on to which the connection members 8 are formed. The apertures of the connection members 8 may alternatively be made by drilling. Then there are no problems as regards the formation of soot. After the electrodeposition the surface roughness in region of the contact pad 13a of the connection members 8 is usually too great to allow connection thereto of the second conductor pattern 5 present on the carrier 11. Therefore the contact planes 13a of the connection members 8 are final-treated in a fifth operational step and provided with an adhering layer 13, which is this example is formed from a 2 μm-thick nickel layer and a 1 μm-thick gold layer. By mechanically providing "bumps" 14 on the gold layer, which is effected in a sixth operational step, it is possible to connect thereto the conductor ends 7 on the carrier 11. These "bumps" 14 may however alternatively be applied onto the connection members 8 by electrodeposition. It is then not necessary for the contact planes 13a of the connection members 8 to be final-treated and be provided with an adhering layer 13, which saves an operational step. Figure 2 shows the substrate 9 with connection members 8 formed thereon, surrounded by the insulating layer 10 such at it is formed up to and inclusive of the sixth operational step. Now the core limbs 2a, 2b can be placed in the recesses (Figure 3). The insulating layer 10 now forms a second insulating film between the core limbs 1a, 1b and the first conductor pattern 6. In a seventh operational step the "bumps" 14 present on the connection members are bonded to the conductor ends by means of thermocompression. In this operation a pressure die 16 which is heated to approximately 500°C presses each conductor end 7 onto a "bump" 14 (Figure 4). The bond thus obtained is shown in Figure 5. In a further advantageous connection method said sixth operational step can be omitted. Then, the contact planes 13a of the connetion members 8 are provided in a fifth step with a layer 35 of low melting material, for example In, Pb, Sn. In a subsequent operational step this layer is heated and simultaneously pressed against the conductor ends 7 of the second conductor pattern 5, by means of a heated pressure die 16 (Figure 6). In this situation diffusion of the members 5, 8 to be interconnected occurs on the layer 35, as a result of which a connection is obtained between the connection members 8 and the conductor ends 7 of the second conductor pattern 5 (Figure 7). To mechanically relieve these connections, the carrier 11 is cemented to a magnetic head holder plate 32.

Figure 8 shows a magnetic head of a dual construction produced in accordance with the method described in the foregoing and which can advantageously be used in situations in which two information tracks must be written next to each other. The magnetic head shown comprises four core limbs 17a, 17b, 18a, 18b, which are of such different dimensions that the transducing gaps 21, 22 can be placed close to each other. The core limbs are partly enclosed by coils, not shown, when first conductor pattersn located on two substrates and second conductor patterns 23a, 23b, 29a, 29b are present on two carriers 27, 33. Each carrier also carries a pair of supply conductors 28 and 34, respectively. Respective conductor ends 24 and 30 of the conductors of the second conductor patterns 23a, 23b and 29a, 29b, respectively, are connected to respective connection members 25 and 31 which are enveloped by an insulating layer 26. The core limbs are provided with recesses which constitute winding apertures 29, 30. It will be obvious that alternatively other types of magnetic heads can be produced within the scope of the invention by means of the manufacturing method described here.

## Claims

1. A method of producing a magnetic head having at least one winding aperture (3) and at least one transducing gap (15), the magnetic head including at least one electrically conducting coil (4a, 4b) and at least one core limb (1a, 1b) which is surrounded at least partly by the coil, the method being based on a substrate (9) on which a first electrically conducting conductor pattern (6) is provided, electrically conducting connection members (8) having at least one contact pad (13a) are formed by electrodeposition on this conductor pattern, the core limb (1a, 1b) is positioned on the first conductor pattern (6) and partly between the connection members (8), a first insulating film being formed between the core limb and the conductor pattern (6), thereafter the connection members (8) are electrically connected via their contact pads (13a) to a second electrically conducting conductor pattern (5) present on a carrier (11), a second insulating film being formed between the core limb (1b, 1b) and the second conductor pattern (5), characterized in that prior to the formation of the connection members (8) the first conductor pattern (6) is provided with an electrically insulating layer (10) having apertures extending as far as the conductor pattern and at least one recess (10a, 10b) whereafter the connection members (8) are formed in said apertures and the core limb (1a, 1b) is placed in the recess.

2. A method of producing a magnetic head having at least one winding aperture (3) and at least one transducing gap (15), the magnetic head including at least one electrically conducting coil (4a, 4b) and at least one core limb (1a, 1b), which is surrounded at least partly by the coil, in which method a first electrically conducting conductor pattern (6) is formed, one pad of this conductor pattern (6) being connected to a substrate (9), electrically conducting connection members (8) having at least one contact pad (13a) are formed by electrodeposition on a different pad of this conductor pattern, the core limb (1a, 1b) is placed on the first conductor pattern (6) and partly between the connection members (8), a first insulating film being formed between the core limb and the conductor pattern (6), thereafter the connection members (8) are electrically connected via their contact pads to a second electrically conducting conductor pattern (5) present on a carrier (11), a second insulating film being formed between the core limb (1a, 1b) and the second conductor pattern (5), characterized in that the first conductor pattern (6) is formed on an insulating layer (10), the insulating layer carrying the first conductor pattern being provided with a protective layer which corresponds to said substrate (9), and that in the insulating layer (10) apertures are made which extend to as far as the conductor pattern and at leat one recess (10a, 10b), whereafter the connection members (8) are formed in said apertures and the core limb (1a, 1b) is placed in the recess.

3. A method as claimed in Claim 1 or 2, characterized in that the connection memebrs (8) are only formed on the first conductor pattern (6) present on the substrate (9).

4. A method as claimed in Claim 1 or 2, characterized in that at least substantially cylindrical connection members (8) are formed.

5. A method as claimed in Claim 1, 2 or 3, characterized in that prior to the application of the insulating layer (10) or the protective layer which corresponds to the substrate to the first conductor pattern (6) a glue film is applied on the first conductor pattern.

6. A method as claimed in Claim 2, characterized in that prior to the application of the protective layer which corresponds to the substrate (9) onto the first conductor pattern (6) a glue film is applied on the first conductor pattern.

7. A method as claimed in any one of the preceding claims, characterized in that the apertures and the recess in the insulating layer (10) are made with the aid of a laser.

8. A method as claim in Claim 7, characterized in that after the apertures have been made by means of a laser these apertures are cleaned with the aid of an oxidizing agent.

9. A method as claimed in Claim 8, characterized in that the apertures are cleaned with the aid of the oxidation agent potassium permanganate and sodium hydroxide at a temperature of at least substantially 70°C followed by a peroxide sulphuric acid treatment.

10. A method as claimed in any one of the preceding Claims 1 to 6, characterized in that the apertures in the insulating layer (10) are made by machining.

11. A method as claimed in any one of the preceding Claims, characterized in that the connection members (8) are connected to the second conductor pattern (5) present on the carrier (11) by bumps (14) which are obtained by means of a bumping technique.

12. A method as claimed in Claim 11, characterized in that the contact pads (13a) of the connection members (8) are final-treated and provided with an adhering layer (13) on which the bumps (14) are provided mechanically.

13. A method as claimed in Claim 12, characterized in that the adhering layer (13) is constituted by a 2μm-thick nickel layer having a 1μm-thick gold layer on top thereof.

14. A method as claimed in Claim 11, characterized in that the bumps (14) are applied by electrodeposition on the contact pads (13a) of the connection members (8).

15. A method as claimed in Claim 11, 12, 13 or 14, characterized in that the applied bumps (14) are bonded to free ends (7) of the second conductor pattern (5) present on the carrier (11) by means of thermocompression.

16. A method as claimed in any one of the preceding Claims 1 to 10, characterized in that the contact pad (13a) of the connection members (8) are provided by means of electrodeposition with a connecting layer (35) of a low-melting material, whereafter by melting of this layer and simultaneous pressing of the second conductor pattern (5) against the layer the connection members (8) are bonded by diffusion to the second conductor pattern (5).

17. A method as claimed in any one of the preceding Claims, characterized in that the carrier (11) is cemented onto a head holder plate (32).

18. A magnetic head which can be produced in accordance with the method as claimed in any one of the preceding Claims, comprising at least one electrically conducting coil (4a, 4b), at least one core limb (1a, 1b), which is partly surrounded by the coil, at least one winding aperture (3) and at least one transducing gap (15), an insulating film being present between core limb and coil, the coil having a first electrically conducting conductor pattern (6) at one side of the core limb and a second electrically conducting conductor pattern (5) at another at least substantially parallel side of the core limb, as well as electrically conducting connection members (8) which extend between the conductor patterns, characterized in that each connection member (8) forms one integral whole with one of the conductor patterns (5, 6) and is connected to the other conductor pattern via a connection.

19. A magnetic head as claimed in Claim 18, characterized in that all the connection members (8) form an integral whole with one of the conductor patterns (6) and are all connected to the other connection pattern (5) via connections.

20. A magnetic head as claimed in Claim 18 or 19, characterized in that supply conductors (12) are present on the carrier (11).

21. A magnetic head as claimed in Claim 18, 19 or 20, characterized in that the magnetic head includes a further core limb (1b), which is connected to the previous core limb (1a), a transducing gap (15) being present between these core limbs.

22. A magnetic head as claimed in any one of the Claims 18 to 21, characterized in that the magnetic head includes a further coil (4b) which is electrically connected to the previous (4a).

23. A magnetic head as claimed in any one of the Claims 18 to 22, characterized in that it is of a multiple construction and includes at least two transducing gaps (21, 22) and at least two magnetic heads, which are produced in accordance with any one of the preceding Claims 1 to 17.

FIG.1

FIG.2

FIG.3

FIG.4

FIG.5

# FIG.6

# FIG.7

# FIG.8